(19) Europäisches Patentamt
European Patent Office
Office européen des brevets

(11) EP 2 094 764 B1

(12) **EUROPEAN PATENT SPECIFICATION**

(45) Date of publication and mention of the grant of the patent:
**22.09.2010 Bulletin 2010/38**

(21) Application number: **07822605.7**

(22) Date of filing: **15.11.2007**

(51) Int Cl.:
***C08G 75/23*** *(2006.01)*

(86) International application number:
**PCT/EP2007/062358**

(87) International publication number:
**WO 2008/059004 (22.05.2008 Gazette 2008/21)**

(54) **TRANSPARENT AND FLAME RETARDANT POLYSULFONE COMPOSITIONS**

TRANSPARENTE UND FLAMMWIDRIGE POLYSULFONZUSAMMENSETZUNGEN

COMPOSITIONS DE POLYSULFONE TRANSPARENTES ET IGNIFUGES

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **17.11.2006 US 866332 P**

(43) Date of publication of application:
**02.09.2009 Bulletin 2009/36**

(73) Proprietor: **Solvay Advanced Polymers, L.L.C.**
**Alpharetta, GA 30005-3914 (US)**

(72) Inventor: **SCHWAB, Thomas H.**
**Cumming, Georgia 30040 (US)**

(74) Representative: **Jacques, Philippe et al**
**Solvay S.A.**
**Département de la Propriété Industrielle**
**Rue de Ransbeek, 310**
**1120 Bruxelles (BE)**

(56) References cited:
**EP-A- 1 544 231**
**WO-A-00/60009**
**WO-A-01/66620**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 094 764 B1

## Description

BACKGROUND OF THE INVENTION

FIELD OF THE INVENTION

The invention is related to polysulfones that contain first and second different sulfone units as the only repeating units. The first of the repeating sulfone units of the polysulfone is a polyphenylsulfone unit based on a diphenyl sulfone and a biphenol. The second repeating unit of the polysulfone is a fluorinated polysulfone based on a diphenyl sulfone and a hexafluorobisphenol A. The invention further relates to methods of manufacturing the polysulfones, compositions containing the polysulfones, methods of using the polysulfones, and articles made from the polysulfones.

DESCRIPTION OF THE RELATED ART

Polysulfones are polymers that have repeating or recurring $-SO_2-$ groups. The term "polysulfone" is used generically to describe any polymer containing repeating or recurring units of one or more diaryl sulfone groups (e.g., monomers) of general formula $-(Ar-SO_2-Ar)-$, where Ar is a substituted or unsubstituted aryl group such as a phenyl, biphenyl, bisphenol or any other aryl group containing an aromatic hydrocarbon or hetero-aromatic ring.

Polysulfones include repeating or recurring units of a diaryl sulfone such as diphenyl sulfone (e.g., $(-C_6H_4)-SO_2-(C_6H_4)-)$ bonded to a diphenol such as biphenol (e.g., $HO-(C_6H_4)-(C_6H_4)-OH$). A single diphenyl sulfone group is shown below.

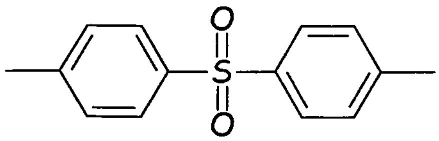

Commercially important polysulfones generally contain only a single type of diaryl sulfone group. Most polysulfones do not include sulfone groups other than a diarylsulfone (e.g., the only $-SO_2-$ groups is a diaryl sulfone group). Likewise, most polysulfones contain only a single type of diphenol such as biphenol or bisphenol A.

Well known and commercially available polysulfones include the polysulfone identified herein as PSU. PSU contains reacted units of diphenyl sulfone and bisphenol A (BPA). PSU is available commercially from Solvay Advanced Polymers (i.e., under the tradename UDEL®). The UDEL polysulfone includes polymerized groups of diphenylsulfone and bisphenol A. The structure of the repeating unit of a UDEL polysulfone, made by condensing bisphenol A and 4,4'-dichlorodiphenyl sulfone, is shown below. PSU has a high glass transition temperature (e.g., about 185°C) and exhibits high strength and toughness.

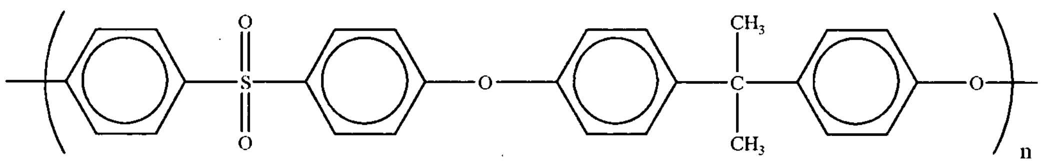

RADEL R® polyphenylsulfone is another polysulfone available from Solvay Advanced Polymers. RADEL R polyphenylsulfone is made by reacting units of 4,4'-dichlorodiphenyl sulfone and 4,4'-biphenol. A polyphenylsulfone, such as RADEL R, that includes reacted groups ofbiphenol and diphenyl sulfone is identified herein as PPSU. The chemical structure of a RADEL R polyphenylsulfone is shown below.

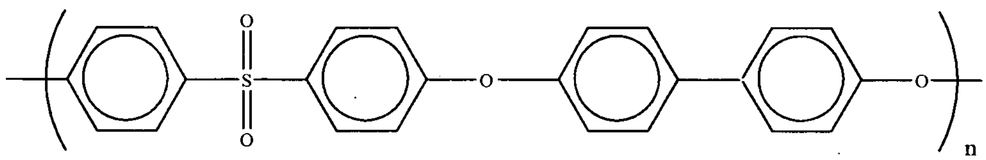

Other polysulfones include co-polymers having at least two different types of sulfone and/or diphenol groups. RADEL A® polyethersulfones, available from Solvay Advanced Polymers, include a polyethersulfone portion made from repeating or recurring groups of formula $(-Ar-SO_2-Ar-O)_n$ and a relatively lower amount of a polyetherethersulfone portion of formula $(-Ar-SO_2-Ar-O-Ar'-O-)_m$ , where the polyethersulfone portion and the polyetherethersulfone portion are bonded to one another. The chemical structures of a polyether sulfone and a polyetherethersulfone portion of a RADEL A co-polymer are shown below.

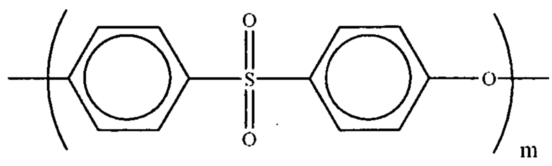

polyethersulfone

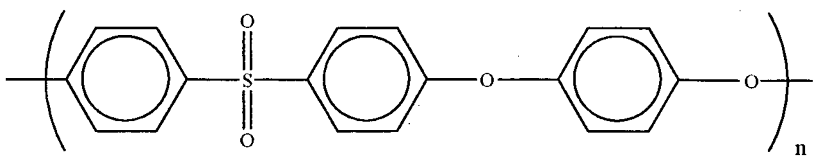

polyetherethersulfone

Polysulfones are typically amorphous and do not melt crystallize. One substantial advantage of polysulfones is their transparency. Due to their high strength and heat resistance, certain polysulfones may be used in high-stress environments where other transparent polymers such as polycarbonate may degrade or may otherwise be unsuitable. Polysulfones are particularly well suited for aircraft applications where lightness and strength are key properties. Polysulfones are used in many aircraft applications including, for example, passenger service units, staircases, window reveals, ceiling panels, information displays, window covers, ceiling panels, sidewall panels, wall partitions, display cases, mirrors, sun visors, window shades, storage bins, storage doors, ceiling overhead storage lockers, serving trays, seat backs, cabin partitions, and ducts. Transparent articles such as windows, lighting fixtures and partitions are especially well suited for polysulfones and compositions containing polysulfones.

Further advantages of polysulfones include good chemical resistance, such that polysulfones are able to withstand exposure to the types of cleaning fluids used in the aircraft industry; processability in the melt phase including injection molding and extrusion; and ease of colorability.

Polysulfones undergo thermal degradation, e.g., burning or combustion, with low smoke emission and low thermal emission. To be permitted for use inside aircraft, engineering thermoplastics, including polysulfones, must meet certain requirements for flame resistance (e.g., flame retardency) and heat release during combustion. Air worthiness standards issued by the U.S. government and codified in Title 14 Code of Federal Regulations (51 Federal Register 26206, July 21, 1986 and 51 Federal Register 28322, August 7, 1986) provide flammability standards based on heat calorimetry testing. The air worthiness standards of Title 14 of the CFR are incorporated by reference herein in their entirety.

The heat calorimetry testing methodology used to determine whether an engineering thermoplastic meets U.S. government air worthiness standards were developed at Ohio State University and are known as the OSU Flammability Test. The OSU tests measure the two minute total heat release (THR) and peak heat release (HRR) in kilowatt minutes per square meter of surface area, i.e., $kW\cdot min/m^2$, and kilowatt per square meter of surface area, i.e., $kW/m^2$, respectively, for the first five minutes of a burn test under the conditions of the OSU testing.

The most recent air worthiness standards, enacted in 1990, for engineering thermoplastics require that both THR and HRR have values of 65 or less for both THR and HRR. Some polysulfone materials such as PSU meet current air worthiness standards; however, when used as a blend with other polymers the THR and/or HRR thresholds may be exceeded. Moreover, in the future, air worthiness standards are likely to become stricter, e.g., leading to a further lowering of permissible maximum THR and/or HRR values. Further improvements in the flame resistance/flame retardancy and thermal release properties of polysulfone materials are desirable to improve aircraft safety and to permit continued use of polysulfones in the aircraft applications.

Of the polysulfones that are presently commercially available, polyphenylsulfone (PPSU) in particular provides

excellent performance for aircraft applications where transparency is required. Still, the heat release properties of polysulfones that are currently commercially available are inferior to the heat release properties of other engineering thermoplastic compositions, especially opaque plastic materials and/or blends that contain one or more conventional flame retardants.

Conventional flame retardants such as triphenyl phosphate or melamine cyanurate are often mixed with conventional engineering thermoplastics to improve heat release properties and to reduce flammability. Such conventional flame retardants may be added to polysulfone compositions; however, the resulting compositions often exhibit significantly impaired transparency. For example, when added to a polysulfone, such flame retardants may not be miscible with the engineering thermoplastic and consequently impart haze and/or an opaque appearance to the polysulfone. Common flame retardants, including inorganic additives such as $TiO_2$, ZnO or Zinc borate, provide improved flame retardancy only at high loading levels with a concomitant negative effect on weight, processability and optical properties.

Fluorocarbon resins such as polytetrafluoroethylene have been used to improve the flame retardance, flame resistance and thermal release properties of conventional engineering thermoplastics such as polycarbonate. Fluorocarbon resins have also been used in combination with polysulfones. For example, U.S. Patent No. 5,204,400 discloses flame retardant thermoplastic compositions comprising the poly(biphenylethersulfone) of formula:

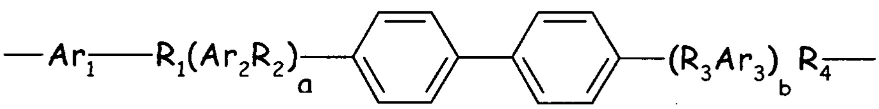

wherein $R_1$ though $R_4$ are -O-, $-SO_2-$, -S-, -C(O)-, with the provision that at least one of $R_1$ though $R_4$ is an $-SO_2-$ group and that at least one of $R_1$ though $R_4$ is -O-; $Ar_1$, $Ar_2$, $Ar_3$ are arylene radicals containing 6 to 24 carbon atoms. The compositions further contain anhydrous Zinc borate and a fluorocarbon polymer present in the form of finely divided solids.

U.S. Patent No. 5,916,958 discloses compositions comprising a poly(biphenylethersulfone) of formula :

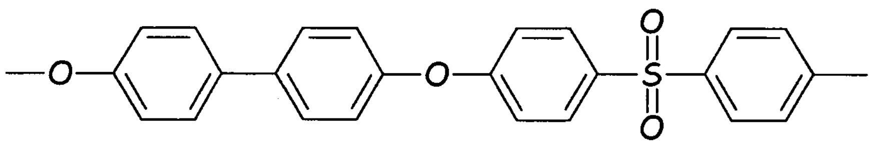

in combination with a fluorocarbon polymer and titanium dioxide. The compositions exhibited enhanced flame retardant characteristics and were described as useful for making aircraft interior parts. The fluorocarbon polymer additive is preferably a polytetrafluoroethylene (PTFE) in the form of a finely divided solid having a particle size of less than about 5 $\mu$m.

U.S. Patent No. 6,503,988 discloses flame resistive compositions containing a flammable thermoplastic resin, a flame retardant, and a polytetrafluoroethylene fine powder comprising particles of 0.05 to 1 $\mu$m as an anti-dripping agent. Polysulfone resins are mentioned as suitable flammable thermoplastic resin.

US Patent No. 6,482,880 discloses poly(biphenylethersulfone) resins having improved resistance to yellowing that include PTFE in particulate form.

While such compositions may provide, in some cases, improved flame resistance, flame retardance, and/or reduced thermal release during combustion, the presence of the fluorinated polymer has a strongly negative effect on the optical and appearance properties of the resulting compositions and leads to a pearlescent and/or opaque appearance. Further, the presence of a fluorinated resin makes the resulting compositions difficult to color. The increased degree of haze and other detrimental optical affects exclude the use of such compositions from applications in which transparency is required.

Thus, there is a need for transparent polysulfone materials and polysulfone-containing compositions that exhibit improved flame resistance, flame retardancy and/or lower thermal release on combustion, which concurrently have excellent optical properties, including transparency.

SUMMARY OF THE INVENTION

Accordingly, in order to address the above noted deficiencies of conventional polysulfone compositions, and to provide polysulfones having low thermal release properties, it is one object of the invention to provide polysulfones that include a first sulfone unit made from diphenyl sulfone and biphenol, and a second sulfone unit made from diphenyl

sulfone and hexafluorobisphenol A, where the first and second sulfone units are the only repeating or recurring units of the polysulfone.

Another object of the invention is to provide polysulfones and compositions thereof having high transparency, high flame resistance, and low thermal release on combustion.

Another object of the invention is to provide polysulfone materials having a mixed block/random structure.

Another object of the invention is to provide polymer compositions that include the polysulfones and one or more additional polymers miscible with the polysulfones.

Another object of the invention is to provide polysulfone compositions that include the polysulfones and one or more fillers or additives that are not soluble in the polysulfones.

Another object of the invention is to provide a polysulfone having a total heat release (THR) of 50 kW·min/$m^2$ or less.

Another object of the invention is to provide a polysulfone having a peak heat release (HRR) of 50 kW/$m^2$ or less.

DETAILED DESCRIPTION OF THE PREFERRED EMBODIMENTS

The polysulfones of the invention are co-polymers having two different sulfone units as the only repeating sulfone units of the polysulfone. The term "sulfone unit" is used herein to describe a recurring or repeating unit that contains a sulfone group (i.e., diphenyl sulfone) and a diphenol group (i.e., biphenol or hexafluorobisphenol A).

More precisely, the polysulfone includes recurring units of a first sulfone unit of the following formula I :

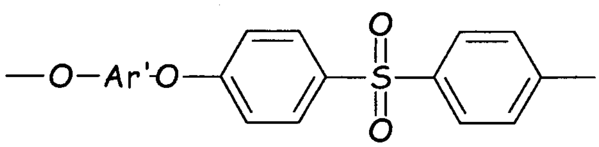

(I)

where Ar' is :

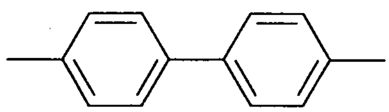

(i.e., the "PPSU unit")
and recurring units of a second sulfone unit of the formula I where Ar' is :

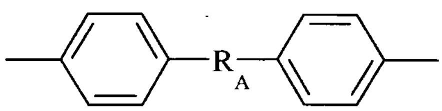

where $R_A$ is :

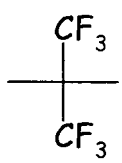

(i.e., the "PSU-AF unit").

The polysulfones of the invention have repeating or recurring units of two and only two different sulfone units. There are no other recurring or repeating sulfone units or other polymerizable monomer units present in the polysulfones

of the invention. A first sulfone unit is a polyphenylene sulfone unit (i.e., PPSU unit) based on one biphenol group and one diphenyl sulfone group. In the first sulfone unit the biphenol group is 4,4'-biphenol, i.e.

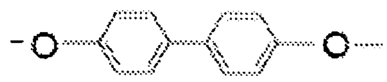

and the diphenyl sulfone group is 4,4'-diphenyl sulfone, i.e.

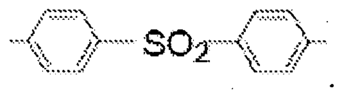

A second sulfone unit is a partially fluorinated polysulfone unit (i.e., PSU-AF unit) based on one bisphenol A group and one diphenylsulfone group. The bisphenol A group is hexafluorobisphenol A :

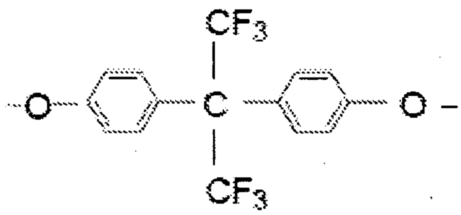

and the diphenylsulfone group is 4,4'-diphenyl sulfone, i.e.

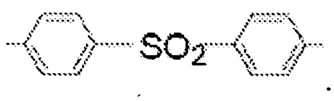

The sulfone units do not contain any other group other than the sulfone group and one of a hexafluorobisphenol A or a biphenol group.

The polysulfone of the invention is a co-polymer that contains, as sole recurring units, repeating or recurring units of the PPSU unit combined with (e.g., reacted with and chemically bonded with) repeating or recurring units of the PSU-AF unit. The polysulfone of the invention is therefore a PPSU/PSU-AF co-polymer having the following chemical formula.

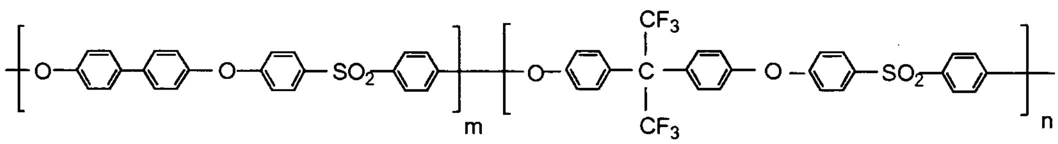

The PPSU and PSU-AF units may be present in the polysulfone of the invention in varying ratios relative to one another. In the formula above, the values for m and n may vary.

In one embodiment m and n are of the same order of magnitude. In said embodiment, the m/n molar ratio is advantageously of at least ½, preferably at least $^{2}/_{3}$ and more preferably at least $^{9}/_{10}$; besides, the m/n molar ratio is advantageously of at most 2.0, preferably at most 1.5, and more preferably at most 1.1. Excellent results were obtained when both the PPSU and PSU-AF units were present in about the same molar amount, i.e. when the m/n molar ratio was about 1.

In another embodiment of the invention the PPSU unit is present in a substantially lesser molar amount than the molar amount of the PSU-AF unit. This results in an increased amount of fluorination of the copolymer. Such copolymers may be especially preferred for improved flame resistance and flame retardance. For example, the molar ratio of

PPSU:PSU-AF units may be 0.2. Accordingly, the molar ratio of m/n is usually less than $^1/_2$; notably, it may be of at most 0.4, at most 0.3, at most 0.2, at most 0.1, at most 0.05, at most 0.03, at most 0.02, and at most 0.01; for example, the m/n ratio may be $^1/_3$.

In another embodiment of the invention the PSU-AF unit is present in a substantially lesser molar amount than the molar amount of the PPSU unit. Such copolymers may be especially preferred for improved toughness and lower cost. Accordingly, the molar ratio of m/n is usually greater than 2 ; it may be notably of at least 2.5, at least 3, at least 4, at least 5, at least 10, at least 20, at least 30, at least 40, at least 50, at least 100 ; for example, the m/n ratio may be 8.

The polysulfone polymer includes, as the repeating or recurring units, only (i) PPSU units based on only 4,4'-diphenol groups and diphenylsulfone groups, and (ii) PSU-AF units based on only hexafluorobisphenol A and diphenyl sulfone, wherein the ratio of the PPSU unit and PSU unit may vary as stated above so long as no other recurring monomer units are present however terminating units such as phenols, alkoxides, halides, esters, etc., which may optionally be fluorinated, may be present.

The polysulfone co-polymer of the invention therefore consists of at least one terminal group and repeating units that include only the PPSU sulfone unit and the PSU sulfone unit. Because it is not possible to obtain any of diphenyl sulfone, biphenol, or hexafluorobisphenol A (or any derivatives or precursors of the aforementioned groups such as dichlorodiphenyl sulfone) in a form that is 100 % pure and free from any contaminant, the term "consisting of", as it is used herein, does not exclude other diphenols, sulfones or other polymerizable/condensable monomer groups to the extent that such groups are present in the starting materials used to make the copolymers of the invention. For example, a co-polymer of the invention that consists of units of repeating units of only the PPSU and PSU sulfone units may include monomer groups other than biphenol, hexafluorobisphenol A and diphenyl sulfone present in amounts of no more than 5 %, preferably 4 %, more preferably 3 %, more preferably 2 % and most preferably 1 % by weight based on the weight of the co-polymer, when such groups enter the co-polymer adventitiously as contaminants of the starting materials used to make the co-polymer.

The weight average molecular weight of the polysulfone of the invention may be in any range that provides for practical processing, e.g., injection molding, extrusion, sheet forming, etc., under melt or thermoforming conditions to provide molded, formed and/or extruded articles having desirable physical and mechanical properties as well as good optical properties. The weight average molecular weight of the polysulfones of the invention may range from about 10,000 to about 100,000, preferably about 40,000 to about 90,000, more preferably 50,000 to 80,000, more preferably 60,000 to 75,000, measured by gel permeation chromatography using methylene chloride as a solvent and polystyrene calibrations standards.

Melt flow rates of the polysulfones of the invention are desirably low. For example, melt flow rates of from 2-40 g/10 min are preferred, more preferably from 6-35 g/10 min, more preferably from 8-30 g/10 min, more preferably from 10-25 g/10 min, and most preferably from 14-20 g/10 min. Melt flow rates are reported as measured under the conditions of ASTM method D 1238 at a temperature of 365°C and a load of 5 kg. Melt flow rates of greater than 15 g/10 min may also be used.

The glass transition temperature for the polysulfones of the invention may range from about 180 to about 250°C, preferably 190-240°C, more preferably 200-230°C, more preferably 205-225°C, more preferably 210-220°C.

It is preferable to have a reduced amount of hydroxyl termination because terminal hydroxyls may undergo oxidation during melt processing and thereby impart undesirable color to the polysulfone. Preferably, the amount of hydroxyl end groups is less than 10 μm eq/g, more preferably less than 5 μm eq/g, and most preferably less than or equal to 2 μm eq/g.

The fluorine content of the polysulfones of the invention is not limited and may be as much as 22 wt % based upon the total weight of the polysulfone. The fluorine is in the form of fluorine bonded to the isopropylidene groups of the hexafluorobisphenol A group. Preferably the fluorine is present in an amount of from 1-22 % by weight, more preferably 3-20 %, more preferably 5-18 %, more preferably 6-17 %, and any ranges or subranges therebetween.

The polysulfones of the invention include polymers in which the PPSU units and PSU-AF units are randomly distributed in the polymer. In other embodiments the polysulfones of the invention have a block structure wherein a first sulfone unit and a second sulfone unit appear in an irregular but predictable repeating or recurring manner. The blocks may contain repeating or recurring units of only one of the first or second sulfone groups and/or sulfone groups. For example, a block may contain at least two of the same sulfone units bonded together. The polysulfone may contain polymerized blocks of a first sulfone unit that are randomly distributed among groups of randomly polymerized first and the second sulfone units.

In one embodiment of the invention the polysulfone co-polymer contains portions of random structures and portions of block structures. The random portion of the polysulfone is a portion wherein the sulfone units are randomly distributed. The block portion of the polysulfone includes portions in which the sulfone units repeat or recur in a predictable manner.

The polysulfone co-polymer may have a structure that is from 0 to 100 % random and from 0 to 100 % block. Preferably the co-polymer has from 20 to 80 % random structure and from 80 to 20 % block structure, more preferably

from 30 to 70 % random structure and from 70 to 30 % block structure, more preferably from 40 to 60 % random structure and from 60 to 40 % block structure, most preferably the polysulfone co-polymer has about 50 % random structure and about 50 % block structure.

In the polysulfone co-polymer containing only PPSU and PSU -AF units, the random/block structure ratio may be determined by using $^1H$ and $^{13}C$ NMR spectroscopy techniques. Specifically, 2D NMR spectroscopy including $^1H$-$^1H$ COSY, $^1H$-$^{13}C$ HSQC, $^1H$-$^{13}C$ HMBC and ID-$^1H$ and $^{13}C$ NMR techniques.

The structure of the block portions may be represented as described below. In the co-polymer of the invention, the diphenyl group of the sulfone may be represented as A; the biphenol group may be represented as B; and the hexafluorobisphenol A group may be represented as C. Each of A, B and C represent one molecule of the individual monomer groups of the group including diphenyl sulfone, diphenol, and hexafluorobisphenol A. Several different pentads (e.g., groups of recurring units of sulfone groups and diphenol groups) are identified in the NMR spectra including ACABA, ACACA, ABABA, and ABACA structures.

The aforementioned pentad structures represent block units can be represented as the following structures (SF-BPAF)-(SF-BP)-SF (i.e., (PSU-AF)-(PPSU)-SF); (SF-BPAF)-(SF-BPAF)-SF (i.e.,(PSU-AF)-(PSU-AF)-SF); (SF-BP)-(SF-BP)-SF (i.e., (PPSU)-(PPSU)-SF); and (SF-BP)-(SF-BPAF)-SF (i.e., (PPSU)-(PSU-AF)-SF), respectively, where SF is diphenylsulfone, BPAF is hexafluorobisphenol A, and BP is biphenol. The different structures are discernable by different $^{13}C$ NMR signals representing certain carbons of the diphenol group (e.g., the carbon atom of the C-O bond). Other structures including triads and quadrads, and higher structures, may also be present in the copolymers of the invention.

The hexafluorobisphenol A is preferably at least 99 % isomerically pure with single hydroxyl substitution at the 4 and 4' positions of the phenyl groups. Other isomers such as 2,4'-hexafluorobisphenol A are present in amounts that are preferably less than 1 % by weight. Other phenols such as phenol or fluorinated derivatives of phenol are preferably present in an amount of less than 1 % by weight. Residual hydrofluoric acid (i.e., HF) is preferably present in an amount of 2 ppm or less. Likewise, non-fluorinated diphenol monomers are preferably not present at all or present in an amount of less than 1 % by weight.

The structure of hexafluorobisphenol A is shown below.

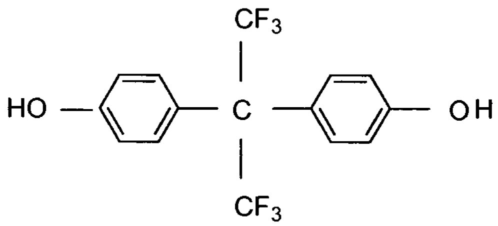

Hexafluorobisphenol A

The sulfone groups of the sulfone units of the polysulfones of the invention are based on diphenyl sulfone and may be derived from a dihalodiphenylsulfone starting material, e.g., dichlorodiphenyl sulfone (DCDPS), difluorodiphenyl sulfone (DFDPS), etc.

The polysulfones of the invention may be prepared by reacting mixtures that contain a first sulfone unit and a second sulfone unit. The first and/or second sulfone unit may be prepared separately and purified before forming the co-polymer. For example, the first and/or second sulfone unit may be prepared by first reacting dichlorodiphenylsulfone and biphenol to form a precursor mixture containing discreet (e.g., not polymerized) PPSU units, and/or oligomers thereof. The PPSU unit-containing precursor mixture may then be further reacted with a mixture containing discreet PSU-AF units and/or a mixture containing a hexafluorobisphenol A derivative and diphenyl sulfone derivative to form the co-polymer.

Preferably, the PPSU and PSU-AF units are not prepared separately but instead the preparation of the co-polymer is carried out by reacting a mixture that contains all of the different diphenol groups and the diphenylsulfone groups at the same time to form a polymer containing a distribution of PPSU and PSU-AF units.

The polysulfones and polysulfone units of the invention may be made by reacting a compound having two hydroxyl groups in the form of alkali or alkaline earth metal salts with a dihalogenated diphenylsulfone such as 4,4'-dichlorodiphenyl sulfone (DCDPS). For example, the reaction may be carried out by reacting a metal salt ofbiphenol with dichlorodiphenylsulfone to thereby eliminate a metal halide which may be insoluble in the reaction medium. Precipitation of the resulting metal salt by-product from the reaction solution is one way to drive the reaction to completion. By carrying out the reaction of the alkali or alkaline earth salt of the biphenol with the dihalodiphenylsulfone in a non-protic solvent, displacement of the halogen substituents of the dihalodiphenylsulfone leads to the formation of a new C-O bond.

The reaction of the metal salt of biphenol with a dihalodiphenylsulfone to form the polysulfone of the invention is preferably carried out in a non-protic solvent. Because the solubility of the resulting alkali or alkaline earth metal halide side-product is very low in such solvents, it is easy to separate the polysulfone from the side product of the salt elimination reaction (e.g., the metal halide salt) after the reaction is complete. Preferably the reaction is carried out in a solvent such as a sulfoxide or sulfone solvent. The solvent may effectively dissolve both the reactants, e.g., the alkaline earth or alkali metal salts of the biphenol, and the resulting polymer.

The non-protic (e.g., aprotic) solvent is preferably a substantially anhydrous dipolar aprotic solvent such as, e.g., dimethylsulfone, diphenylsulfone, dimethylacetamide, N-methylpyrrolidinone (i.e., NMP), tetrahydrothiophene-1,1-dioxide (e.g., sulfolane), tetrahydrothiophene-1-monoxide and mixtures thereof.

The reaction of the alkali or alkaline earth metal salt of the biphenol with the dihalodiphenylsulfone is usually carried out at a temperature of from 190-250°C, preferably from about 200 to about 230°C, still more preferably about 210 to about 220°C. The reaction may be carried out for a period of from 0.5 to 3 hours.

Advantageously, the reaction is carried out under an inert atmosphere, such as nitrogen gas, argon gas or another gas that does not react with any of the starting materials, intermediates or products of the reaction.

The use of polar aprotic solvent provides another benefit. Any water formed during the reaction may form an azeotrope with a solvent. The water may later be removed as its azeotrope by distillation. In one embodiment of the invention, the distillation is carried out continuously during the polymerization reaction. When a further solvent such as an aromatic hydrocarbon, e.g., toluene, mono-chlorobenzene, xylene, and/or ethylbenzene, is present, a distillable azeotrope of the further solvent and water may be formed. As the reaction progresses under heating, the azeotrope may be continuously removed and thereby maintains an anhydrous condition during the reaction. Azeotropes of materials such as, e.g., toluene, xylene, ethylbenzene, and chlorobenzene, may be removed by distillation as the reaction proceeds.

In another embodiment of the inventive process for making the polysulfones of the invention, the synthesis of the polysulfones may be carried out in a one-step process wherein an alkaline earth or alkali metal salt of a diphenols is reacted with a dihalodiphenylsulfone in a dipolar aprotic solvent and the resulting mixture is concurrently or subsequently polymerized without isolation of any intermediate. In a corresponding two-step process, the diphenols are first converted to an alkaline earth metal salt or alkali metal salt by reaction of the diphenols with an alkaline metal or alkaline earth metal compound. The resulting solution of the metal salts of the diphenols is then mixed with a solution of the dihalodiphenylsulfone, or optionally the pure dihalodiphenylsulfone, incrementally or all at once.

In another embodiment of the invention, a molar excess of an alkali metal carbonate is reacted with a diphenol and a dihalodiphenylsulfone. The reaction may be carried out with, for example, a 25 mol % excess of the alkali metal carbonate, preferably 15 mol %, more preferably 10 mol %, even more preferably 5 mol % excess. The diphenol reacts *in situ* with the alkali metal carbonate to form an alkali metal salt and the resulting alkali metal salt reacts with the dihalodiarysulfone.

The use of an alkali metal carbonate having an average particle size of less than about 100 μm is particularly preferred. The use of an alkali metal carbonate having such a particle size permits the synthesis of the polysulfone to be carried out at a relatively lower reaction temperature with faster reaction. Similar methods of preparing polysulfones are disclosed in U.S. Patent No. 6,593,445, incorporated herein by reference in its entirety. Sodium and potassium carbonate salts, singly or in combination, may be used to provide a polysulfone having desirable molecular weight characteristics. Higher molecular weight polysulfones may be obtained when a potassium salt is used.

After the reaction of the diphenol metal salts with the dihalodiphenylsulfone is complete, the resulting polysulfone may be end-capped with one or more compounds such as the mono-phenol mentioned herein. Preferably, the end capping includes reaction of the polysulfone with a reactive aromatic halide, or an aliphatic halide such as, e.g., methyl chloride. The end groups thus formed may include alkoxides or other ether groups.

To stop the reaction, e.g., the reaction of the diphenol metal salt with the dihalodiphenylsulfone, methyl chloride may be sparged into the reaction mixture to thereby form a terminal methoxide group on the polysulfone.

The resulting polysulfone may be isolated by devolatilization of the reaction mixture after separation of salts with or without first adding additional solvent such as sulfolane or a mixture of sulfolane with another solvent, optionally the azeotrope solvent, to fully dissolve any polysulfone and cause the precipitation of the metal halide. Alternatively, the polysulfone may be isolated by precipitation and/or coagulation by contacting the reaction mixture with a non-solvent for the polymer such as an alcohol or water, or mixtures thereof. The precipitate/coagulate may be rinsed and/or washed with demineralized water prior to drying under reduced pressure and elevated temperature. The resulting precipitate may be further processed by extruding and pelletizing. The pelletized product may subsequently be subjected to further melt processing such as injection molding and/or sheet extrusion.

The conditions for molding, extruding, and thermoforming the resulting polysulfones are well known in the art.

Advantageous properties of the polysulfones of the invention include high flame resistance, high flame retardance, low total heat release, and a low peak heat release. The polysulfones of the invention preferably have both a total heat release (THR) and peak heat release (HRR) of less than 65 kW·min/$m^2$ and kW/$m^2$, respectively, under the

conditions of the OSU flammability test. More preferably the polysulfones of the invention have a THR and a HRR of less than 60, even more preferably less than 55, and more preferably less than 50, even more preferably less than 45 and preferably no more than 40 kW·min/$m^2$ and kW/$m^2$, respectively. The polysulfones of the invention preferably have a lower THR and HRR in comparison to any polycarbonate resin on a weight or molar weight basis. A polycarbonate resin is defined herein as a composition that includes polymerized non-fluorinated and/or fluorinated bisphenol monomers A separated by recurring and repeating carbonate groups. Representative commercially available polycarbonates include MAKROLON, LEXAN and CALIBRE. More preferably, the polysulfones of the invention have a lower THR and HRR in comparison to polycarbonate resins that have a like amount of fluorination on either or both of a weight or molar basis.

The polysulfones and compositions of the invention exhibit toughness and mechanical processability. The compositions are also advantageously readily melt-fabricated to produce molded articles having aesthetically pleasing surfaces. Notched Izod impact strengths are preferably from 2.0 ft-lb/in or greater.

The term transparent is used herein to describe a composition and/or article that is able to transmit image-forming light. The distinctness of the image transmitted through the composition may be used as a measure of transparency. In one sense, transparency depends on the linearity of the passage of light rays through a composition or article.

Generally, when light interacts with matter, it can be reflected, absorbed, scattered, and/or transmitted. A composition or article is generally described as "transparent" if a significant fraction of incident light is transmitted through the composition or article. An object is considered "opaque" if little or substantially no light is transmitted through it. An object is considered "translucent" if some light passes through but not in a way that a coherent image can be seen through it or transmitted through it. Typically, translucence occurs when light takes a circuitous path through the composition or article, scattering due to embedded particles, defects or grain boundaries in the composition or article.

The inventive polysulfones and compositions may be described as transparent when (1) not reflecting significant amounts of incoming light at the incident surface (i.e., advantageously less than 50 %, preferably less than 30 %), (2) not absorbing significant amounts of incoming light (i.e., advantageously less than 50 %, preferably less than 30 %), and (3) not scattering significant amounts of said incoming light (i.e., advantageously less than 50 %, preferably less than 30 %).

According to ASTM D 1746 (incorporated herein by reference in its entirety), transparency can be determined by small-angle scattering. A light source (1) emits a light radiation which is passed though a collimator (2) to guide incident beam towards the sample specimen (4); intensity of incident light beam (3) $I_i$ and of transmitted light (8) deflected of less than 0.1 degree $I_r$ is measured; an aperture (7) avoids reflected (5) and scattered or deflected (6) light to reach the detector (9).

Transparency is thus expressed as a percentage according to the following equation :

$$\%T = \frac{I_r}{I_i} \times 100$$

The polysulfones and compositions of the invention have a transparency of advantageously more than 40 %, preferably of more than 50 %, more preferably more than 60 %, still more preferably of more than 65 %, even more preferably of more than 70 %, especially preferably more than 80 % according to ASTM D 1746, when measured on sheets having a thickness of 100 μm:

Generally, compositions having a transparency of less than 40 %, when measured on sheets having a thickness of 100 μm, cannot be used for aircraft applications wherein transparency is required, because of low clarity and a pearlescent opaque appearance.

The base color of any plastic is an important determinant of whether the plastic is suitable for application in transparent or certain colored applications. A colored application includes any application wherein the polysulfone is mixed with one or more dyes and/or pigments, in combination, optionally, with one or more additional colorless or colored components. The base color of a polysulfone is the color measured on the plastic before the addition of any additional component not already present in the polysulfone derived from a manufacturing process (e.g., added as a part of the polymerization and subsequent extrusion to form pellets and a plaque for measuring color).

The color of transparent polysulfones of the invention is preferably "water clear", e.g., having no detectable color. Because polysulfones may degrade during melt processing some degree of yellowing is often present in the resins. Color is often reported as a measurement of yellowness index or color factor. Color factor and yellowness index are related and may be correlated.

Yellowness index is measured by ASTM method D-1925 and is dependent upon a thickness of a sample through which a measuring beam of light is transmitted. In addition to the ASTM D 1746 method mentioned earlier for measuring transparency, light transmittance may be measured by method ASTM. D-1003. Light transmittance, like yellowness index, is dependent upon the thickness of the sample through which a beam of measuring light is transmitted.

Transmittance is normally measured on a plaque or chip having a thickness of 2.5 mm.

Yellowness index and color factor (e.g., batch color) can also be measured on solutions obtained from the reaction of the monomer groups to form the polysulfones of the invention. Color factors of reactor solutions diluted to 8 wt % polymer with NMP according to U.S. Patent 6,593,445, are generally less than 50 (Yellowness index less than 11), preferably less than 40 (Yellowness index less than 10), and most preferably less than 30 (Yellowness index less than 9).

Due to thermal degradation during melt processing, the batch color (i.e., color factor) and/or yellowness index of plaques molded from the copolymers obtained from the reaction solution are significantly higher. Generally, color factor for a polysulfone of the invention measured on a plaque is less than 150, more preferably less than 140, 130, 120, 110, 100. Batch colors may be improved slightly by moderating the conditions under which the plaques are molded, such conditions including barrel temperature, cycle time, injection pressure and the like.

ASTM D-1003 also provides a measuring method for haze. Haze is the ratio of diffused light transmittance to the total light transmittance expressed as a percent. The haze of the polysulfones of the invention preferably less than 50 %, or preferably less than 40 %, more preferably, less than 30 %, less than 20 %, less than 15 %, less than 10 %, less than 8 %, 9 %, 7 %, 6 %, 5 % and much preferably less than 2 %.

The polysulfones of the invention and compositions containing the polysulfones of the invention provide a combination of excellent mechanical properties and excellent chemical resistance, while concurrently providing excellent optical properties (transparency, color and/or colorability) and have low thermal emission when tested under the OSU conditions. The polysulfones of the invention and compositions containing the polysulfones undergo melt-fabrication at moderate conditions to provide molded and extruded articles having smooth and aesthetically pleasing surface characteristics. The polysulfones of the invention are advantageously readily pigmented in a wide range of colors, and are useful in a number of applications, in particular for the construction of various panels and parts for aircraft interiors.

EXAMPLES

A series of experiments were carried out to synthesize different polysulfones of the invention. The examples below were synthesized according to the procedures of U.S. Patent No. 6,593,445. Different polysulfones containing PPSU and PSU-AF sulfone units as the only repeating and/or recurring groups were made. The properties of the resulting copolymers are shown in the table below.

The yellowness index and color factor for a series of copolymers containing PPSU units and PSU-AF units are compared in the table below. The color data for the samples below were measured on liquid samples taken from reaction solutions obtained by reacting biphenol, 4,4'-dichlorodiphenylsulfone and hexafluorobisphenol A, in the presence of potassium carbonate. Yellowness index was measured according to ASTMD 1925. Batch color is obtained by measuring the color factor.

Table 1 : Correlation of PPSU/PSU-AF Batch Color vs Yellowness Index Measurements on Reactor Solutions)

| Experiment No. | PPSU/PSU-AF molar ratio | Batch Color | Yellowness Index (D1925) | BC / YI Ratio |
|---|---|---|---|---|
| 1 | 50/50 | 22 | 8.99 | 2.45 |
| 2 | 50/50 | 24 | 9.11 | 2.63 |
| 3 | 50/50 | 40 | 10.49 | 3.81 |
| 4 | 50/50 | 55 | 11.22 | 4.90 |
| 5 | 50/50 | 67 | 11.56 | 5.80 |
| 6 | 50/50 | 70 | 11.70 | 5.98 |
| 7 | 50/50 | 72 | 11.85 | 6.08 |

Polysulfone co-polymers consisting of PPSU units and PSU-AF units were measured for THR and HRR under OSU test conditions. The results are tabulated below.

Table 2 : PPSU/PSU-AF Flammability Data

| Experiment No. | Copolymer | Copolymer Composition (mole %) | Fluorine Content (wt %) | OSU Data Peak Heat Release (kW/$m^2$) |
|---|---|---|---|---|
| Control | PPSU | 100/0 | 0 | 62.1 |

(continued)

| Experiment No. | Copolymer | Copolymer Composition (mole %) | Fluorine Content (wt %) | OSU Data Peak Heat Release ($kW/m^2$) |
|---|---|---|---|---|
| 8 | PPSU / PSU-AF | 90/10 | 2.74 | 44.1 |
| 9 | PPSU / PSU-AF | 80/20 | 5.30 | 39.9 |
| 10 | PPSU / PSU-AF | 75/25 | 6.51 | 42.2 |
| 11 | PPSU / PSU-AF | 50/50 | 11.99 | 33.7 |
| 12 | PPSU / PSU-AF | 25/75 | 16.67 | 28.4 |

A polysulfone co-polymer of the invention consisting of PPSU units and PSU-AF units in a 50:50 molar ratio was measured for IZOD impact. The results are tabulated below.

Table 3 : IZOD Impact for a PPSU/PSU-AF Copolymer (50/50 Mole Ratio)

| | | | PPSU/PSU-AF 50:50 molar ratio | PPSU 100 % |
|---|---|---|---|---|
| Izod Impact Strength :<br>Notched<br>Unnotched | <br>D-256<br>D-4812 | <br>ft-lb/in<br>$ft\text{-}lb/in^2$ | <br>(1) 2.1[(1)]<br>NB[(2)] | <br>13.0<br>NB |
| [(1)] Number of bars complete break = 5.<br>[(2)] Number of bars no break (NB) = 5. | | | | |

Co-polymer plaques molded from a polysulfone of the invention having a 50:50 molar ratio of PPSU/PSU-AF units were tested for vertical ignition properties, smoke emission and toxic gas generation characteristics. Testing for determination of heat release (e.g., THR and HRR) was carried out. Acceptance criteria for smoke and toxicity were specified by Boeing Document D6-51377, Revision E, incorporated herein by reference.

A 60 second vertical ignition was conducted as described in FAR 25.853(a), Amendment 25-83, Appendix F, Part I, incorporated herein by reference. During the 60 second vertical ignition test, no dripping was observed and the time to extinguish was less than 1 second. The burned length of the three samples was an average of 2.8 inches. The values obtained for the polysulfone of the invention may be compared with acceptable criteria defined as follows : maximum allowed time to extinguish = 15 seconds, the maximum burned length = 6 inches and the maximum allowed drip time to extinguish = 3 seconds.

Heat release testing was conducted in accordance with FAR 25.853(d), Amendment 25-83, according to Appendix F, Part IV, incorporated herein by reference. The average value of peak heat release rate for the heat release rate testing according to FAR 25.853(d), Amendment 25-83, Appendix F, Part IV, as described in DOT/FAA/AR-00/12, as presented in the "Aircraft Materials Fire Test Handbook," dated April 2000, incorporated herein by reference, was used to generate the data of Table 2.

Smoke testing was performed according to FAR 25.853(d), Amendment 25-83, Appendix F, Part V and BSS 7238, Revision C, each of which is incorporated herein by reference. The smoke emission test showed that the copolymer of the invention, i.e., the copolymer from which the plaques were made, had an average value of 1. This compares to a maximum allowed average value for specific optical density of smoke of 200.

Toxic gas generation was tested for BSS 7239, Revision A, incorporated herein by reference. Testing of the copolymer of the invention generated 30 ppm of CO, 2 ppm of HCl, no $NO_x$ and no HCN were detected, 20 ppm of $SO_2$, and 10 ppm of HF. The specification, i.e., Boeing Document No. D6-51377, Revision E, Table 1, provides a maximum allowable toxic gas generation values in ppm for CO = 3,500 ppm, HCl= 500 ppm, $NO_x$ = 100 ppm, HCN = 150 ppm, $SO_2$ = 100 ppm and HF = 200 ppm.

Each of the sample plaques met the requirements for 60 second vertical ignition bum, heat release, smoke emission, and toxic gas emission defined in the above-mentioned tests and/or Boeing Document Nos.

**[0094]** As shown above by the examples and as explained in the detailed description of the invention, the polysulfones of the invention, which contain as repeating or recurring units only a first sulfone unit of diphenyl sulfone and bisphenol, and a second sulfone unit of diphenyl sulfone and hexafluorobisphenol A, provide significant advantages over conventional polysulfones (e.g., non-fluorinated polysulfones) and/or mixtures of conventional polysulfones with fluorinated resins, as shown by improved heat release and optical characteristics.

The polysulfones of the invention may be advantageously used in aircraft applications such as, for example,

passenger service units, staircases, window reveals, ceiling panels, information displays, window covers, ceiling panels, sidewall panels, wall partitions, display cases, mirrors, sun visors, window shades, storage bins, storage doors, ceiling overhead storage lockers, serving trays, seat backs, cabin partitions, and ducts. The polysulfones of the invention also provide substantial advantages in transparent articles such as windows, lighting fixtures and partitions are especially well suited for polysulfones and compositions containing polysulfones.

Obviously, numerous modifications and variations of the present invention are possible in light of the above teachings. It is therefore to be understood that within the scope of the appended claims, the invention may be practiced otherwise than as specifically described herein.

## Claims

1. A polysulfone copolymer, consisting of :

    first and second repeating sulfone units and one or more terminal groups, wherein the repeating sulfone units consist of :

    first sulfone units made of bonded units of a biphenol group and a diphenylsulfone groups of formula I,

    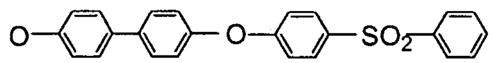

    (I)

    and second sulfone units made of bonded units of a hexafluorobisphenol A group and a diphenylsulfone group of formula II

    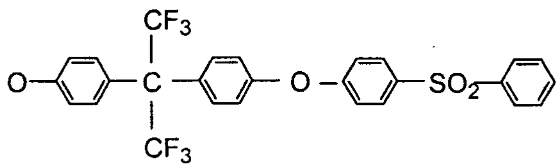

    (II)

2. The polysulfone copolymer of claim 1, wherein the first and second sulfone units are present in a ratio of 1:0.01-100.

3. The polysulfone copolymer of anyone of the preceding claims, wherein the polysulfone copolymer has terminal methoxide groups.

4. The polysulfone copolymer of anyone of the preceding claims, having a light transmittance greater than 80 % according to ASTM D-1003.

5. The polysulfone copolymer of anyone of the claims 1 to 4, wherein at least a portion of the first and second sulfone units are randomly distributed.

6. The polysulfone copolymer of anyone of the claims 1 to 4, wherein at least a portion of the first and second sulfone units are present as blocks.

7. The polysulfone copolymer of anyone of the preceding claims, having a total heat release of less than 50 kW·min/$m^2$, according to the OSU flammability test.

8. The polysulfone copolymer of anyone of the preceding claims, having a peak heat release of less than 50 kW/$m^2$, according to the OSU flammability test.

9. The polysulfone copolymer of anyone of the preceding claims, having a color of 150 or less when measured on a molded plaque defined in ASTM-1278.

**10.** A process for manufacturing the polysulfone copolymer of anyone of the preceding claims, comprising :

reacting a mixture comprising 4,4'-biphenol, hexafluorobisphenol A, and 4,4'-dichlorodiphenylsulfone, in the presence of a molar excess of potassium carbonate.

**11.** A polymer blend composition, comprising :

the polysulfone copolymer of anyone of claims 1 to 9 or manufactured by the process according to claim 10 and one or more additional thermoplastic materials.

**12.** A transparent article made from the polysulfone copolymer of anyone of claims 1 to 9 or manufactured by the process according to claim 10, or the polymer blend composition according to claim 11.

**13.** A transparent sheet, comprising :

the polysulfone copolymer of the polysulfone copolymer of anyone of claims 1 to 9 or manufactured by the process according to claim 10 in the form of an extruded sheet, or the polymer blend composition according to claim 11.

**14.** A transparent aircraft window, lighting fixture, or partition in the form of a transparent sheet of the polysulfone copolymer of the polysulfone copolymer of anyone of claims 1 to 9 or manufactured by the process according to claim 10, or the polymer blend composition according to claim 11.

**15.** A article for an aircraft application made from the polysulfone copolymer of anyone of claims 1 to 9 or manufactured by the process according to claim 10, or the polymer blend composition according to claim 11, in a form selected from the group consisting of a passenger service unit, a staircase, a window reveal, a ceiling panel, an information display, a window cover, a ceiling panel, a sidewall panel, a wall partition, a display case, a mirror, a sun visor, a window shade, a storage bin, a storage door, a ceiling overhead storage locker, a serving tray, a seat back, a cabin partition, and a duct.

## Patentansprüche

**1.** Polysulfon-Copolymer, bestehend aus :

ersten und zweiten sich wiederholenden Sulfon-Einheiten und einer oder mehreren Endgruppen,
wobei die sich wiederholenden Sulfon-Einheiten aus :

ersten Sulfon-Einheiten aus gebundenen Einheiten einer Biphenolgruppe und einer Diphenylsulfongruppe der Formel I

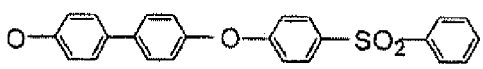

(I)

und zweiten Sulfon-Einheiten aus gebundenen Einheiten einer Hexafluorbisphenol-A-Gruppe und einer Diphenylsulfongruppe der Formel II

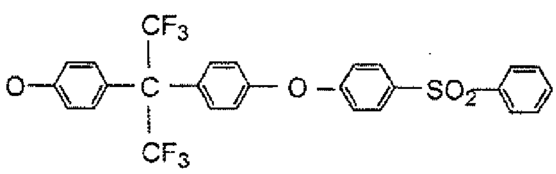

(II)

bestehen.

2. Polysulfon-Copolymer nach Anspruch 1, wobei die ersten und zweiten Sulfon-Einheiten in einem Verhältnis von 1: 0,01-100 vorliegen.

3. Polysulfon-Copolymer nach einem der vorhergehenden Ansprüche, wobei das Polysulfon-Copolymer Methoxid-Endgruppen aufweist.

4. Polysulfon-Copolymer nach einem der vorhergehenden Ansprüche mit einer Lichtdurchlässigkeit von mehr als 80 % gemäß ASTM D-1003.

5. Polysulfon-Copolymer nach einem der Ansprüche 1-4, wobei mindestens ein Teil der ersten und zweiten Sulfon-Einheiten statistisch verteilt sind.

6. Polysulfon-Copolymer nach einem der Ansprüche 1-4, wobei mindestens ein Teil der ersten und zweiten Sulfon-Einheiten als Blöcke vorliegen.

7. Polysulfon-Copolymer nach einem der vorhergehenden Ansprüche mit einer Gesamtwärmefreisetzung von weniger als 50 kW·min/$m^2$ gemäß dem OSU-Entflammbarkeitstest.

8. Polysulfon-Copolymer nach einem der vorhergehenden Ansprüche mit einer Spitzenwärmefreisetzung von weniger als 50 kW/$m^2$ gemäß dem OSU-Entflammbarkeitstest.

9. Polysulfon-Copolymer nach einem der vorhergehenden Ansprüche mit einer Farbe von 150 oder weniger bei Messung an einer Formscheibe gemäß ASTM-1278.

10. Verfahren zur Herstellung des Polysulfon-Copolymers nach einem der vorhergehenden Ansprüche, bei dem man :

    eine Mischung, die 4,4'-Biphenol, Hexafluorbisphenol A und 4,4'-Dichlordiphenylsulfon enthält, in Gegenwart eines molaren Überschusses von Kaliumcarbonat umsetzt.

11. Polymerblendzusammensetzung, umfassend:

    das Polysulfon-Copolymer nach einem der Ansprüche 1 bis 9 oder das nach dem Verfahren gemäß Anspruch 10 hergestellte Polysulfon-Copolymer und ein oder mehrere zusätzliche thermoplastische Materialien.

12. Transparenter Gegenstand aus dem Polysulfon-Copolymer nach einem der Ansprüche 1 bis 9 oder dem nach dem Verfahren gemäß Anspruch 10 hergestellten Polysulfon-Copolymer oder der Polymerblendzusammensetzung nach Anspruch 11.

13. Transparentes Flächengebilde, umfassend :

    das Polysulfon-Copolymer nach einem der Ansprüche 1 bis 9 oder das nach dem Verfahren gemäß Anspruch 10 hergestellte Polysulfon-Copolymer in Form eines extrudierten Flächengebildes oder die Polymerblendzusammensetzung nach Anspruch 11.

14. Transparentes Luftfahrzeugfenster, transparente Leuchte oder transparente Trennwand in Form eines transparenten Flächengebildes aus dem Polysulfon-Copolymer nach einem der Ansprüche 1 bis 9 oder dem nach dem Verfahren gemäß Anspruch 10 hergestellten Polysulfon-Copolymer oder der Polymerblendzusammensetzung nach Anspruch 11.

15. Gegenstand für eine Luftfahrzeuganwendung aus dem Polysulfon-Copolymer nach einem der Ansprüche 1 bis 9 oder dem nach dem Verfahren gemäß Anspruch 10 hergestellten Polysulfon-Copolymer oder der Polymerblendzusammensetzung nach Anspruch 11 in einer Form aus der Gruppe bestehend aus einer Passagier-Service-Einheit, einer Treppe, einer Fensterlaibung, einer Deckenplatte, einer Informationsanzeige, einer Fensterabdeckung, einer Seitenwandtafel, einem Wandteiler, einer Vitrine, einem Spiegel, einer Sonnenblende, einer Jalousie, einem Speicherbehälter, einer Speichertür, einer Überkopf-Gepäckablage, einem Serviertablett, einem Sitzrücken, einer Kabinentrennwand und einer Leitung.

**Revendications**

1. Copolymère polysulfone, constitué de :

premiers et deuxièmes motifs récurrents sulfone et d'un ou plusieurs groupes terminaux, dans lequel les motifs récurrents sulfone sont constitués de :

premiers motifs sulfone composés de motifs liés d'un groupe biphénol et d'un groupe diphénylsulfone de formule I,

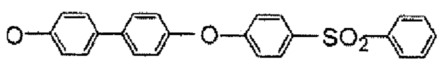

(I)

et de deuxièmes motifs sulfone composés de motifs liés d'un groupe hexafluorobisphénol A et d'un groupe diphénylsulfone de formule II

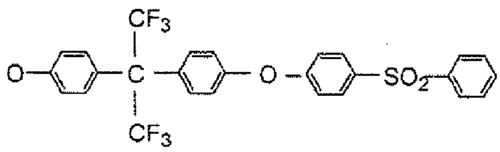

(II)

2. Copolymère polysulfone selon la revendication 1, dans lequel les premiers et deuxièmes motifs sulfone sont présents dans un rapport de 1:0,01-100.

3. Copolymère polysulfone selon l'une quelconque des revendications précédentes, dans lequel le copolymère polysulfone possède des groupes terminaux méthylate.

4. Copolymère polysulfone selon l'une quelconque des revendications précédentes, présentant une transmittance de la lumière supérieure à 80 % selon ASTM D-1003.

5. Copolymère polysulfone selon l'une quelconque des revendications 1 à 4, dans lequel au moins une partie des premiers et deuxièmes motifs sulfone sont répartis statistiquement.

6. Copolymère polysulfone selon l'une quelconque des revendications 1 à 4, dans lequel au moins une partie des premiers et deuxièmes motifs sulfone sont présents sous forme de blocs.

7. Copolymère polysulfone selon l'une quelconque des revendications précédentes, présentant un dégagement de chaleur total inférieur à 50 kW.min/$m^2$, selon l'essai d'inflammabilité OSU.

8. Copolymère polysulfone selon l'une quelconque des revendications précédentes, présentant un pic de dégagement de chaleur inférieur à 50 kW/$m^2$, selon l'essai d'inflammabilité OSU.

9. Copolymère polysulfone selon l'une quelconque des revendications précédentes, ayant une couleur de 150 ou moins, mesurée sur un panneau moulé selon la définition de la norme ASTM-1278.

10. Procédé de fabrication du copolymère polysulfone selon l'une quelconque des revendications précédentes, comprenant les étapes consistant à :

faire réagir un mélange comprenant du 4,4'-biphénol, de l'hexafluorobisphénol A et de la 4,4'-dichlorodiphénylsulfone, en présence d'un excès molaire de carbonate de potassium.

11. Composition de mélange de polymères, comprenant :

le copolymère polysulfone selon l'une quelconque des revendications 1 à 9 ou fabriqué par le procédé selon la revendication 10 et un ou plusieurs matériaux thermoplastiques supplémentaires.

**12.** Article transparent fait à partir du copolymère polysulfone selon l'une quelconque des revendications 1 à 9 ou fabriqué par le procédé selon la revendication 10, ou la composition de mélange de polymères selon la revendication 11.

**13.** Feuille transparente, comprenant :

le copolymère polysulfone selon l'une quelconque des revendications 1 à 9 ou fabriqué par le procédé selon la revendication 10 sous la forme d'une feuille extrudée, ou la composition de mélange de polymères selon la revendication 11.

**14.** Hublot d'avion transparent, luminaire transparent ou cloison transparente sous la forme d'une feuille transparente du copolymère polysulfone selon l'une quelconque des revendications 1 à 9 ou fabriqué par le procédé selon la revendication 10, ou de la composition de mélange de polymères selon la revendication 11.

**15.** Article pour application en avionique fait à partir du copolymère polysulfone selon l'une quelconque des revendications 1 à 9 ou fabriqué par le procédé selon la revendication 10, ou de la composition de mélange de polymères selon la revendication 11, sous une forme choisie dans le groupe constitué par un bloc service passagers, un escalier, une moulure de hublot, un panneau de plafond, un panneau d'affichage, un couvre-hublot, un panneau de paroi latérale, une cloison, un comptoir-vitrine, un miroir, un pare-soleil, un obturateur de hublot, un casier de réserve, une porte de réserve, un casier à bagages supérieur, un plateau de service, un dossier de siège, une cloison de cabine et une gaine.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5204400 A
- US 5916958 A
- US 6503988 B
- US 6482880 B
- US 6593445 B